# EUROPEAN PATENT APPLICATION

(11) **EP 1 195 540 A1**
(43) Date of publication of application: **10.04.2002**
(21) Application number: 01915791.6
(22) Date of filing: 26.03.2001
(51) Int. Cl.: F16F 9/43

(54) **GAS SPRING AND METHOD OF CHARGING GAS INTO THE GAS SPRING**

(30) Priority: 31.03.2000 JP 2000099443
(71) Applicant: Pascal Kabushiki Kaisha, Itami-shi, Hyogo-ken 664-0006 (JP)
(72) Inventor: Kimura, Seiji Pascal Kabushiki Kaisha, Itami-shi, Hyogo 664-0006 (JP)
(74) Representative: Leson, Thomas Johannes Alois, Dipl.-Ing.
(86) International application number: PCT/JP01/02424
(87) International publication number: WO 01/75327

(57) **Abstract**

A gas spring devoid of a gas filling valve is provided, as is a method in which the gas filling chamber of a gas spring can be filled with compressed gas without the use of a gas filling valve.

The gas spring (5) comprises a rod member (20), a cylinder main body (21), a gas filling chamber (22), first and second sealing members (23, 24), a plurality of pin members (25), and a plurality of slots (26). Using a gas filling implement (30) makes it possible to fill the gas filling chamber (22) with compressed gas in a simple and reliable manner even without providing the gas spring (5) with a gas filling valve having a nonreturn valve. Consequently, the entire gas spring (5) can be configured symmetrically about the axial center of the rod member (20), and its center of gravity can be aligned with the axial center of the rod member (20), making it possible to prevent the gas spring (5) from inducing vibrations in the main shaft.

## Description

### Technological Field

The present invention relates to a gas spring and a gas filling method, and more particularly to an improvement for a technique whereby a gas spring can be filled with compressed gas.

### Background Technology

In conventional practice, the gas filling chamber of a gas spring is filled with gas (commonly nitrogen) compressed to a high pressure (about 7-10 MPa), and a gas filling valve equipped with a nonreturn valve is mounted to allow the gas filling chamber to be filled with the compressed gas. The gas spring is filled with compressed gas through the gas filling valve during fabrication, and the compressed gas is subsequently replenished through the gas filling valve as the gas pressure decreases.

In view of this, the applicant has devised and studied the feasibility of applying gas springs to situations in which a drawbar used to fasten a tool to the main shaft of a machine tool is driven toward to the tool fastening side. The main shaft of a contemporary machine tool is rotated at a high speed (30,000-40,000 rpm). When a gas. spring is used to fasten the tool to the main shaft of the machine tool, the gas filling valve is mounted at a position away from the center of the main shaft, so the centrifugal force acting on the gas filling valve causes the main shaft to vibrate and results in reduced machining accuracy.

In view of this, dispensing with the gas filling valve appears to be the preferred option, but no technique has so far been proposed that would allow the gas filling chamber of a gas spring to be filled with compressed gas without a gas filling valve mounted on the gas spring.

An object of the present invention is to provide a gas spring without a gas filling valve and to provide a method in which the gas filling chamber of a gas spring can be filled with compressed gas without the use of a gas filling valve.

### Disclosure of the Invention

The gas spring of the present invention comprises a rod member with a cylindrical piston, a cylinder main body fitted over the rod member, and an annular gas filling chamber filled with compressed gas and disposed between the rod member and the cylinder main body, wherein this gas spring is characterized by further comprising a first sealing member fitted over the piston portion of the rod member at one end of the gas filling chamber, a second sealing member fitted into the cylinder main body at the other end of the gas filling chamber, a plurality of pin members disposed in an axially symmetrical fashion about the rod member, and a plurality of slots provided to the cylinder main body to allow individual mating with the plurality of pin members and to restrict the range of movement of the rod member in relation to the cylinder main body, such that the cylinder main body is moved axially in relation to the rod member while the second sealing member is prevented from separating from the rod member in a state in which the pin members are not yet mounted; the gas filling chamber is filled with compressed gas through the slots; the cylinder main body is then moved back; and the pin members are locked in place.

When the pin members are mounted, they mate with the slots formed in the cylinder main body, and the rod member is restricted in its ability to move relative to the cylinder main body. When the movement range is restricted in this manner, the gap between the rod member and the cylinder main body at the two ends of the gas filling chamber is sealed by the first and second sealing members, and the gas filling chamber is kept in an airtight state. Consequently, the pressure of the compressed gas in the gas filling chamber acts on the piston portion and creates a situation in which the rod member is urged to move relative to the cylinder main body.

For example, the gas spring can be used as a drive mechanism for urging a drawbar on the main shaft of a machine tool toward a tool fastening side in order to fasten the tool on the main shaft. In this case, using a hollow rod member is preferred in order to allow the drawbar to be inserted into the rod member. It is apparent, however, that this concept can also be adapted to a variety of other devices or mechanisms required to perform drive functions.

The pin members are removed when the gas filling chamber is being filled with compressed gas. The pin members are disengaged without being mounted from the slots formed in the cylinder main body, thus removing restrictions on the range of movement of the rod member in relation to the cylinder main body. It is possible at this point to fill the gas filling chamber with compressed gas through the slots as the cylinder main body is axially moved relative to the rod member while the second sealing member is prevented from separating from the rod member (for example, in a state in which at least some of the slots are positioned on the external periphery near one end of the gas filling chamber). The cylinder main body is then returned to its original position, the gas filling chamber is rendered airtight, the compressed gas in the gas filling chamber is sealed, and the pin members are locked in place by being mated with individual slots, completing the introduction of the compressed gas.

Using the gas spring in accordance with the above-described routine allows the gas filling chamber to be filled with compressed gas in a simple and accurate manner, making it possible to dispense with the gas filling valve and allowing the pin members and the slots or other elements in engagement with these pin members to be arranged symmetrically about the axial center of the rod members. It is therefore possible to configure the entire gas spring as a structure symmetrical about the axial center of the rod member and to align its center of gravity with the axial center of the rod member, allowing any reduction in machining accuracy to be securely prevented because the gas spring is prevented from creating vibration even when a main shaft rotates at a high speed in cases in which, for example, the gas spring is used as a drive mechanism for urging a drawbar on the main shaft of a machine tool toward the tool fastening side in order to fasten a tool to the main shaft.

Another gas spring pertaining to the present invention comprises a rod member with a cylindrical piston, a cylinder main body fitted over the rod member, and an annular gas filling chamber filled with compressed gas and disposed between the rod member and the cylinder main body, wherein this gas spring further comprises a first sealing member fitted over the rod member at one end of the gas filling chamber, a second sealing member fitted into the cylinder main body at the other end of the gas filling chamber, and a stopper member internally fitted and threadably engaged with the cylinder main body and slidably fitted over the rod member on the opposite side from the gas filling chamber in relation to the piston portion of the rod member; such that the rod member is moved axially in relation to the cylinder main body while the first sealing member is prevented from reaching the threaded hole for the stopper member of the cylinder main body in a state in which the stopper member is not yet mounted, the gas filling chamber is filled with compressed gas through a rod insertion hole facing the second sealing member, the rod member is then moved back, and the stopper member is mounted.

When mounted, the stopper member is slidably fitted over the rod member on the opposite side from the gas filling chamber in relation to the piston portion of the rod member, and is internally fitted and threadably engaged with the cylinder main body. The range of movement of the rod member in relation to the cylinder main body is thereby restricted by the stopper member. When the movement range is restricted in this manner, the gap between the rod member and the cylinder main body at the two ends of the gas filling chamber is sealed by the first and second sealing members, and the gas filling chamber is kept in an airtight state. Consequently, the pressure of the compressed gas in the gas filling chamber acts on the piston portion and creates a situation in which the rod member is urged to move relative to the cylinder main body.

The stopper member is removed when the gas filling chamber is being filled with compressed gas. When the stopper member is not mounted, there are no restrictions on the range of movement of the rod member in relation to the cylinder main body. It is possible at this point to fill the gas filling chamber with compressed gas through the rod insertion hole facing the second sealing member in a state in which the rod member is axially moved relative to the cylinder main body while the first sealing member is prevented from reaching the threaded hole for the stopper member of the cylinder main body (for example, in a state in which the rod member is removed from the rod insertion hole facing the second sealing member). The rod member is then returned to its original position, the gas filling chamber is rendered airtight, the compressed gas in the gas filling chamber is sealed, and the sealing member is then mounted, completing the introduction of the compressed gas.

Using the gas spring in accordance with the above-described routine allows the gas filling chamber to be filled with compressed gas in a simple and accurate manner, making it possible to dispense with the gas filling valve, to configure the entire gas spring as a structure symmetrical about the axial center of the rod member, and to align its center of gravity with the axial center of the rod member. Consequently, vibration sources can be removed and any reduction in machining accuracy can be securely prevented even when the spring is mounted on the main shaft of a machine tool and the main shaft is rotated at a high speed.

The present invention also provides a gas filling method for introducing compressed gas into a gas spring comprising a rod member with a cylindrical piston, a cylinder main body fitted over the rod member, an annular gas filling chamber filled with compressed gas and disposed between the rod member and the cylinder main body, a first sealing member fitted over the piston portion of the rod member at one end of the gas filling chamber, a second sealing member fitted into the cylinder main body at the other end of the gas filling chamber, a plurality of pin members disposed in an axially symmetrical fashion about the rod member, and a plurality of slots provided to the cylinder main body to allow individual mating with the plurality of pin members and to restrict the range of movement of the rod member in relation to the cylinder main body, wherein this gas filling method is characterized in that the gas spring is placed in a special gas filling implement in a state in which the pin members are not yet mounted; the cylinder main body is moved axially in relation to the rod member while the second sealing member is prevented from separating from the rod member; the gas filling chamber is filled with compressed gas through the gas filling implement and the slots; the cylinder main body is then moved back; and the pin members are locked in place.

When the gas filling chamber is to be filled with compressed gas, the gas spring is placed in a gas filling implement, and the pin members are removed. The pin members are disengaged without being mounted from the slots formed in the cylinder main body, thus removing restrictions on the range of movement of the rod member in relation to the cylinder main body. In this state, the cylinder main body is moved axially in relation to the rod member while the second sealing member is prevented from separating from the rod member, and the gas filling chamber is filled with compressed gas through the gas filling implement and the slots.

The cylinder main body is then returned to its original position, the gas filling chamber is rendered airtight, the compressed gas in the gas filling chamber is sealed, the pin members are locked in place, and the gas spring is removed from the gas filling implement, completing the introduction of the compressed gas. Specifically, filling the gas spring with gas in the this manner allows the gas filling chamber to be filled with compressed gas in a simple and accurate manner without the use of a gas filling valve. It is therefore possible to configure the entire gas spring as a structure symmetrical about the axial center of the rod member and to align its center of gravity with the axial center of the rod member when the gas spring is filled with compressed gas in accordance with the proposed gas filling method. A gas filling valve equipped with a nonreturn valve can be mounted on the gas filling implement, and the gas filling chamber can be filled with compressed gas through the gas filling valve.

The special gas filling implement is characterized by comprising an inner cylinder airtightly fittable over the slot-free portion of the cylinder main body, an outer cylinder configured to extend all the way to one end the inner cylinder and to slidably fit over the inner cylinder in an airtight fashion, a blocking member configured to block one end of the rod member and to airtightly fit into the end portion of the outer cylinder, an axial hole blocking member airtightly inserted into the axial hole of the rod member on the opposite side from the blocking member, and a compressed gas filling conduit formed in the axial hole blocking member.

When the gas filling chamber is to be filled with compressed gas, the gas spring is placed in the gas filling implement, and the area defined by the inner cylinder, outer cylinder, and blocking member outside the rod member is made into a sealed space. The cylinder main body is moved axially in relation to the rod member while the second sealing member is prevented from separating from the rod member in a state in which the pin members are not mounted, allowing the compressed gas introduced into the sealed space through the axial hole of the rod member to be further guided into the gas filling chamber through the slots in a reliable manner. The threaded hole for the pin member formed in the rod member can be used as a gas conduit that leads from the axial hole of the rod member to the sealed space.

The present invention provides another gas filling method for introducing compressed gas into a gas spring comprising a rod member with a cylindrical piston, a cylinder main body fitted over the rod member, an annular gas filling chamber filled with compressed gas and disposed between the rod member and the cylinder main body, a first sealing member fitted over the rod member at one end of the gas filling chamber, a second sealing member fitted into the cylinder main body at the other end of the gas filling chamber, and a stopper member internally fitted and threadably engaged with the cylinder main body and slidably fitted over the rod member on the opposite side from the gas filling chamber in relation to the piston portion of the rod member, wherein this gas filling method for a gas spring is characterized in that the gas spring is placed in a special gas filling implement in a state in which the stopper member is not yet mounted; the rod member is moved axially in relation to the cylinder main body while the first sealing member is prevented from reaching the threaded hole for the stopper member of the cylinder main body; the gas filling chamber is filled with compressed gas through the gas filling implement and a rod insertion hole facing the second sealing member; the rod member is then moved back; and the stopper member is mounted.

When the gas filling chamber is to be filled with compressed gas, the gas spring is placed in a gas filling implement, and the stopper member is removed. When the stopper member is not mounted, the rod member is not restricted in terms of the range within which the member can move in relation to the cylinder main body, the rod member is moved axially in relation to the cylinder main body while the first sealing member is prevented from reaching the threaded hole for the stopper member of the cylinder main body in this state, and the gas filling chamber is filled with compressed gas through the gas filling implement and a rod insertion hole facing the second sealing member.

The rod member is then returned to its original position, the gas filling chamber is rendered airtight, the compressed gas in the gas filling chamber is sealed, the stopper member is mounted, and the gas spring is removed from the gas filling implement, completing the introduction of the compressed gas. Specifically, filling the gas spring with gas in accordance with this method allows the gas filling chamber to be filled with compressed gas in a simple and accurate manner without the use of a gas filling valve. It is therefore possible to configure the entire gas spring as a structure symmetrical about the axial center of the rod member and to align its center of gravity with the axial center of the rod member when the gas spring is filled with compressed gas in accordance with the proposed gas filling method. A gas filling valve equipped with a nonreturn valve can be mounted on the gas filling implement, and the gas filling chamber can be filled with compressed gas through the gas filling valve.

The special gas filling implement is characterized by comprising a casing member having an opening on one side of the stopper member and possessing a housing chamber in which the gas spring can be airtightly accommodated while the rod member is moved axially in relation to the cylinder main body; a blocking member mounted by being fitted into the opening in an airtight and slidable manner and designed to be able to come into contact with the rod member; a pull rod inserted into the axial center of the gas spring and designed such that one end thereof is immovably mounted on the blocking member, and the other end thereof is airtightly inserted into the casing member; and a gas filling conduit formed in the casing member and used to fill the housing chamber with compressed gas.

The housing chamber containing the gas spring can be rendered airtight in a state in which the gas spring is placed in the gas filling implement. It is possible to adopt an arrangement in which the rod member is moved axially in relation to the cylinder main body by the pull rod while the first sealing member is prevented from reaching the threaded hole for the stopper member of the cylinder main body; the gas filling chamber is filled with compressed gas; and the rod member is accurately returned to its original position together with the blocking member by the pulling of the pull rod following the introduction of compressed gas.

### Brief Description of the Drawings

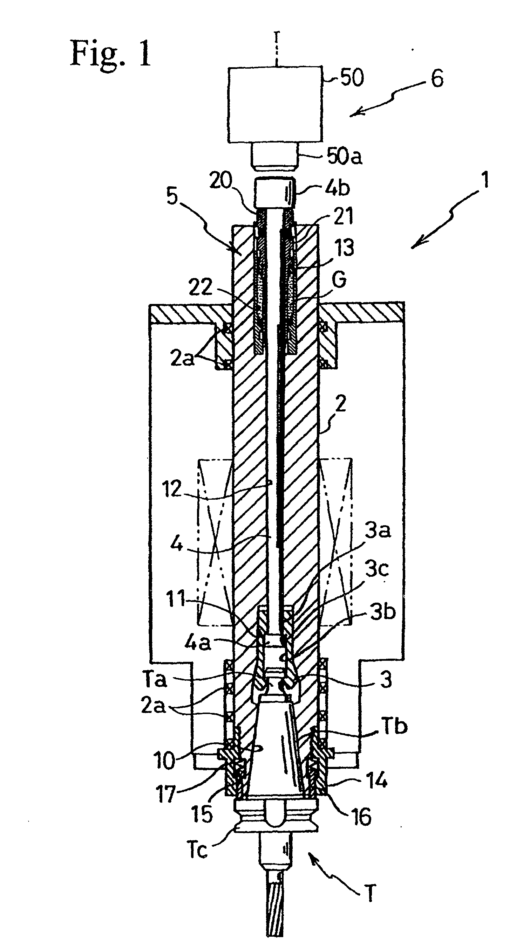

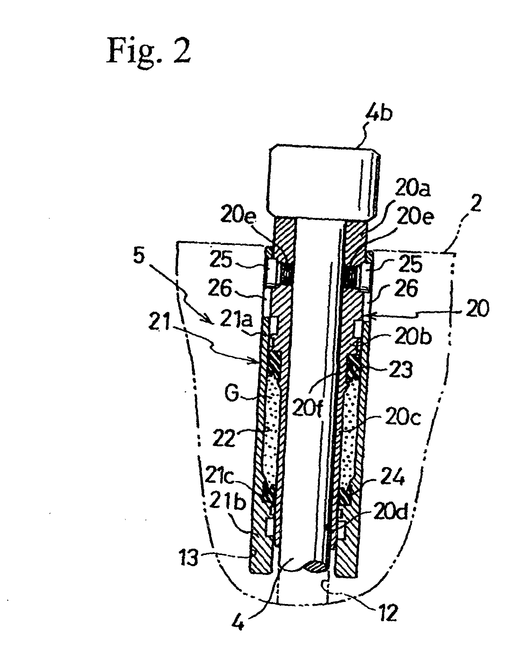

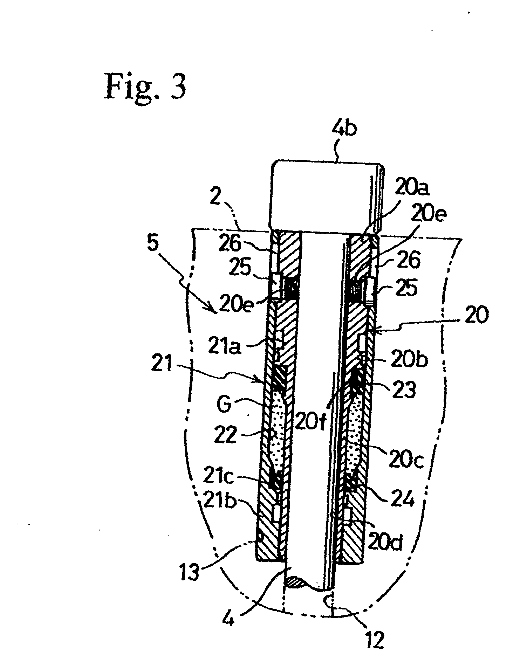

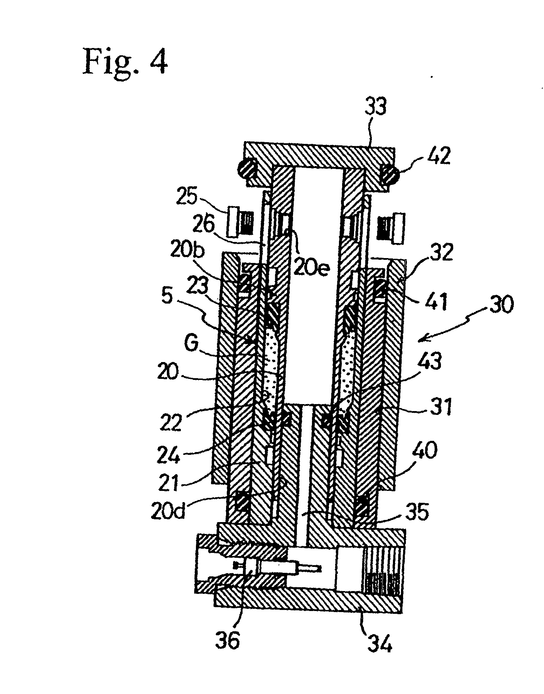

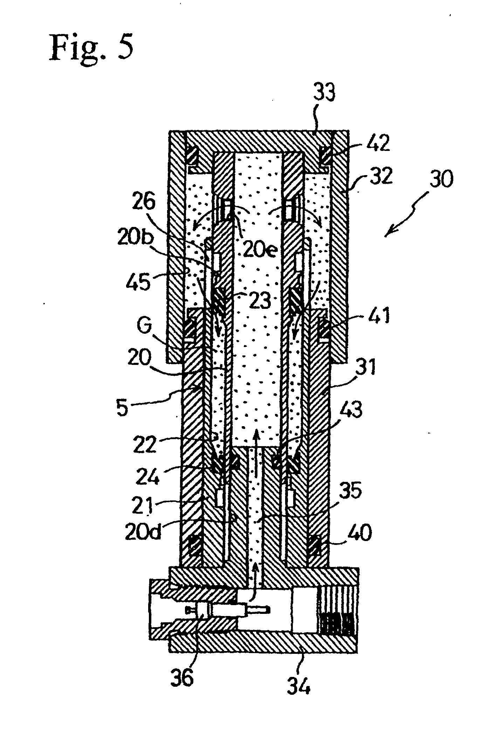

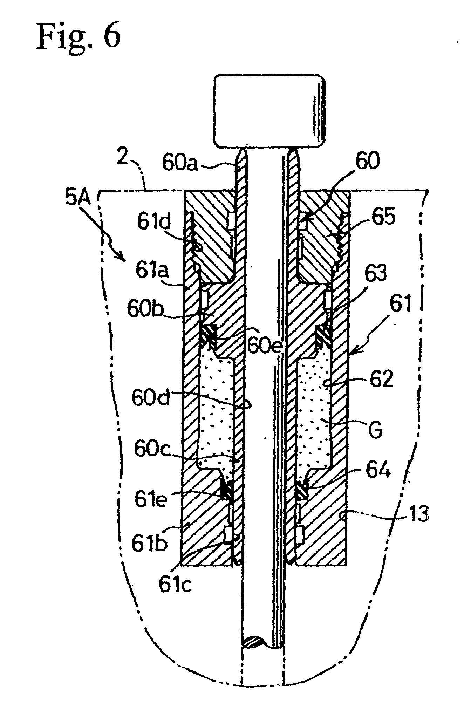

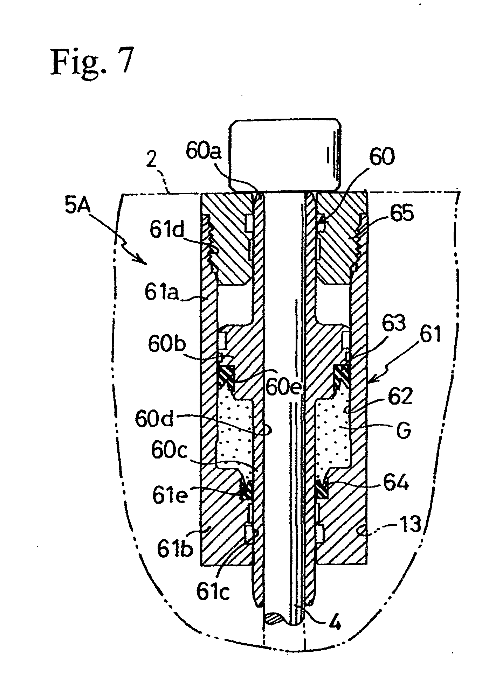

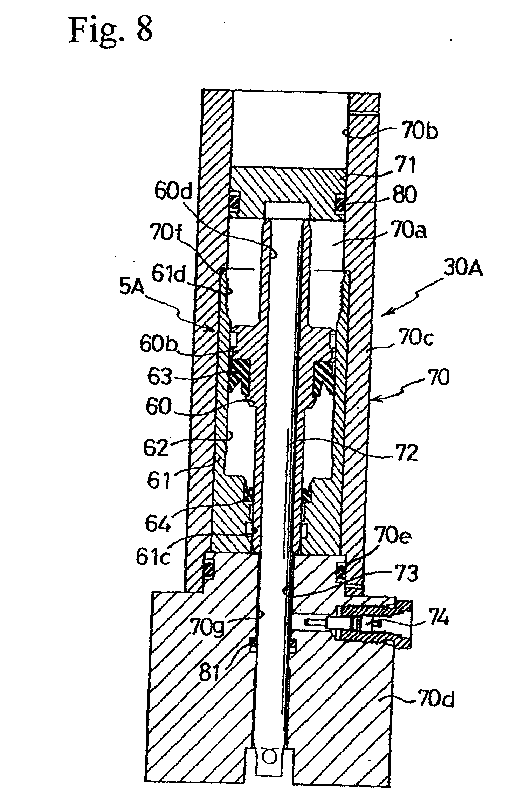

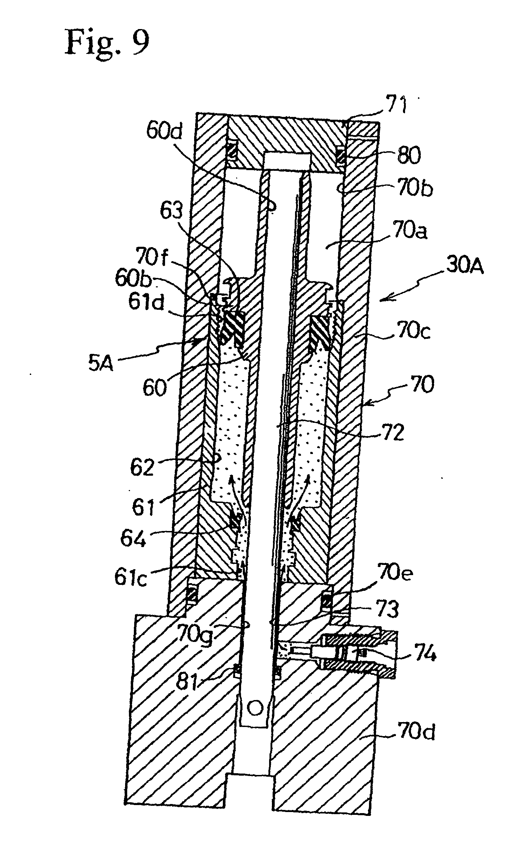

Fig. 1 is a longitudinal section of a main shaft and a tool fastener (with the tool fastened) with a gas spring for a machine tool in accordance with an embodiment of the present invention, Fig. 2 is a longitudinal section of the gas spring and drawbar (tool fastening position), Fig. 3 is a longitudinal section of the gas spring and drawbar (tool release position), Fig. 4 is a longitudinal section of a gas filling implement and the gas spring (before compressed gas is introduced), Fig. 5 is a longitudinal section of the gas filling implement and gas spring (during introduction of compressed gas), Fig. 6 is a longitudinal section of a gas spring and drawbar (tool fastening position) pertaining to another embodiment, Fig. 7 is a longitudinal section of the gas spring and drawbar (tool release position), Fig. 8 is a longitudinal section of a gas filling implement and the gas spring (before compressed gas is introduced), and Fig. 9 is a longitudinal section of the gas filling implement and gas spring (during introduction of compressed gas).

### Preferred Embodiments for Implementing the Invention

Embodiments of the present invention will now be described.

The present embodiment relates to adapting the present invention to a tool fastener whereby a tool can be removably fastened to the tip of a main shaft in a machine tool.

The main shaft 2 of a machine tool is rotatably supported by a plurality of bearings 2a, and the tip thereof is provided with a tapered tool holder 10 flared toward the tip, as shown in Fig. 1.

The tool fastener 1 comprises a collet 3 for releasably engaging a mating portion Ta in the base end of the tool T, a drawbar 4 linked to the collet 3, the proposed proprietary gas spring 5 for allowing the drawbar 4 to urge the tool fastening side (base-end side of the main shaft 2), a release mechanism 6 whereby the drawbar 4 can be driven toward the release side (tip side of the main shaft 2) against the urging force of the gas spring 5, and the like.

A tool holder 10, a container hole 11 for accommodating the collet 3, a through hole 12 for passing the drawbar 4, and a cylinder mounting hole 13 are arranged in a straight line from the tip to the base-end side of the main shaft 2. The tip of the main shaft 2 is fixed in place by threadably fitting the base end portion thereof into a sleeve 14. The space between the main shaft 2 and the tip portion of the sleeve 14 is provided with a plurality of holes 15 such that the base end of a pressure member 16 (whose tip is extended toward the tip of the main shaft 2) is slidably fitted inside each hole 15, and the pressure member 16 is urged toward the tip by a plurality of leaf springs 17 mounted in the holes 15.

The tip of the collet 3 is composed of three or four separate elastic segments. The collet 3 has an axial hole 3a for passing the drawbar 4, and a large hole 3b whose diameter is greater than that of the axial hole 3a provided to the tip of the axial hole 3a. A lock 4a mounted on the tip of the drawbar 4 is fitted into the large hole 3b. The tool T comprises a mating portion Ta, a tapered axial portion Tb, and a wide disk Tc provided to the tip side of the tapered axial portion Tb.

Moving the drawbar 4 to the tool fastening side causes the lock 4a to latch onto a ledge 3c at the border between the axial hole 3a and the large hole 3b. When this happens, the tip of the collet 3 is retracted into the container hole 11 while the segments are shut together. In the process, the tip is caused to engage the mating portion Ta of the tool T, the mating portion Ta is then drawn toward the base end, and the tool T is fastened such that the tapered axial portion Tb thereof is pressed against the tool holder 10.

Fastening the tool T by the tapered axial portion Tb results in a situation in which the disk Tc of the tool T is urged toward the tip side by the pressure member 16, itself urged by the leaf springs 17. When the drawbar 4 moves to the engagement release side, the engagement of the lock 4a with the ledge 3c is released, the tool T is pushed toward the tip by the pressure member 16, and the engagement is released. In addition, the engagement between the collet 3 and the mating portion Ta of the tool T is released and the tool T is freed because the arrangement moves toward the tip while the elastic segments on the tip side of the collet 3 spread open.

Specifically, the drawbar 4 is driven from an engagement release position to a tool fastening position as a result of the fact that the drawbar 4 is urged to the tool fastening side (base-end side of the main shaft 2) by the gas spring 5 through the agency of a mating axial portion 4b immovably mounted on the base end, allowing the drawbar 4 to be held in the tool fastening position and the tool T to be fastened to the tool holder 10. The release mechanism 6 has a hydraulic cylinder 50, which is controllably driven by a drive controller containing a hydraulic supply source, as shown in Fig. 1. The mating axial portion 4b of the drawbar 4 is pushed by the tip of a piston rod 50a, thereby driving the rod member 20 of the gas spring 5 from an extended position to a retracted position, and moving the drawbar 4 to the engagement release side.

The gas spring 5 will now be described in detail. For the sake of convenience, the top, bottom, left, and right sides referred to in the description will correspond to the top, bottom, left, and right sides in Figs. 2-5.

The gas spring 5 comprises a rod member 20 with a cylindrical piston, a cylinder main body 21 fitted over the rod member 20, an annular gas filling chamber 22 filled with compressed gas G and disposed between the rod member 20 and the cylinder main body 21, a first sealing member 23 fitted over the piston portion 20b of the rod member 20 above the gas filling chamber 22, a second sealing member 24 fitted into the cylinder main body 21 below the gas filling chamber 22, a plurality (for example, two) of pin members 25 disposed in an axially symmetrical fashion about the rod member 20, and a plurality (for example, two) of slots 26 provided to the cylinder main body 21 to allow individual mating with the plurality of pin members 25 and to restrict the movement of the rod member 20 relative to the cylinder main body 21 to a prescribed range, as shown in Figs. 2 and 3.

The rod member 20 is configured such that an output portion 20a, a piston portion 20b, and a bottom cylinder 20c are integrally formed in a serial arrangement in the direction from the top end downward, and a drawbar 4 is slidably inserted into an axial hole 20d. The outside diameter and wall thickness of the piston portion 20b is the same as those of the output portion 20a and greater than those of the bottom cylinder 20c.

A plurality (for example, two) of radially extended penetrating threaded holes 20e that are symmetrical about the axis of the rod member 20 are formed near the bottom end of the output portion 20a, and the pin members 25 are detachably screwed into the threaded holes 20e from the outside. An annular recess 20f is formed around the outside of the piston portion 20b at the bottom end thereof, and a first annular sealing member 23 is secured in the annular recess 20f.

The cylinder main body 21, whose vertical length is about the same as that of the rod member 20, is configured as a monolithic structure composed of an upwardly disposed thin-walled cylinder 21a, whose length is about 5/7 of the total length, and a downwardly disposed thick-walled cylinder 21b whose length is about 2/7 of the total length. The thin-walled cylinder 21a is slidably fitted over the piston portion 20b and the output portion 20a of the rod member 20, and the thick-walled cylinder 21b is slidably fitted over the bottom cylinder 20c of the rod member 20.

A plurality of vertically oriented slots 26 are provided to the top portion of the thin-walled cylinder 21a. An annular recess 21c is formed around the inside of the thick-walled cylinder 21b at its top end, and a second annular sealing member 24 is secured in the annular recess 21c. The cylinder main body 21 is detachably fastened by being fitted into the cylinder mounting hole 13 formed in the main shaft 2.

When the pin members 25 are caused to mate with the top ends of the slots 26, the rod member 20 assumes an extended position in which the output portion 20a is extended all the way above the cylinder main body 21, and the drawbar 4 assumes a tool fastening position, as shown in Fig. 2. When the pin members 25 mate with the bottom ends of the slots 26, the rod member 20 assumes a retracted position in which the entire output portion 20a is retracted into the cylinder main body 21, and the drawbar 4 assumes an engagement release position, as shown in Fig. 3.

The movement of the rod member 20 in relation to the cylinder main body 21 is thus limited to the range between the extended position and retracted position when a plurality of pin members 25 are mounted. The space between the rod member 20 and the cylinder main body 21 at the top and bottom of the gas filling chamber 22 is sealed by the first and second sealing members 23 and 24, and the gas filling chamber 22 is kept in an airtight state when the rod member 20 moves up and down within this range. Consequently, the pressure of the compressed gas G in the gas filling chamber 22 acts on the piston portion 20b and creates a situation in which the rod member 20 is urged upward relative to the cylinder main body 21.

Following is a description of a method whereby the gas spring 5 is filled with compressed gas G. The gas filling implement 30 used during gas filling will first be described.

The gas filling implement 30 comprises an inner cylinder 31 airtightly fittable over the portion of the cylinder main body 21 underneath the slots 26, an outer cylinder 32 configured to extend above the inner cylinder 31 and to slidably fit over the inner cylinder 31 in an airtight fashion, a blocking member 33 configured to block the top-end side of the rod member 20 and to airtightly fit into the top end of the outer cylinder 32, an axial hole blocking member 34 airtightly inserted into the axial hole 20d of the rod member 20 on the opposite side from the blocking member 33, a compressed gas filling conduit 35 formed in the axial hole blocking member 34, and a check valve 36 incorporated into the compressed gas filling conduit 35 of the axial hole blocking member 34, as shown in Figs. 4 and 5.

A sealing member 40 fitted into the bottom end of the inner cylinder 31, a sealing member 41 fitted over the top end of the inner cylinder 31, a sealing member 42 fitted over the blocking member 33, and a sealing member 43 fitted over the top end of the axial hole blocking member 34 are provided in order to maintain airtightness among the members 31-34.

When the gas filling chamber 22 of the gas spring 5 is to be filled with compressed gas G by employing the gas filling implement 30, the gas spring 5 is placed into the gas filling implement 30 in the manner shown in Fig. 4, and the blocking member 33 is fitted over the top end of the outer cylinder 32 (see Fig. 5), whereupon the outer cylinder 32 is slid downward, the exterior of the tip portion of the rod member 20 is exposed, and the pin members 25 are removed in this state.

When the pin members 25 are removed, the range within which the rod member 20 can move relative to the cylinder main body 21 is not restricted any longer because the pin members 25 are disengaged from the slots 26 in the cylinder main body 21. The outer cylinder 32 is subsequently slid upward and fitted over the blocking member 33 to form an airtight space 45 bounded by the inner cylinder 31, outer cylinder 32, and blocking member 33 outside the rod member 20, whereupon the rod member 20 is moved together with the outer cylinder 32 and blocking member 33 axially upward with respect to the cylinder main body 21, as shown in Fig. 5. The gas spring 5 may be placed in the gas filling implement 30 after the pin members 25 have been removed. At this time, it is possible to move the rod member 20 upward over a distance at which the second sealing member 24 remains attached to the rod member 20, to align the bottom ends of the slots 26 at least with the external peripheral side near the top end of the gas filling chamber 22, and to fill the gas filling chamber 22 with compressed gas G through the slots 26 in this state.

Specifically, the compressed gas G introduced through the check valve 36 from a gas cylinder or the like in the state shown in Fig. 5 is passed through the compressed gas filling conduit 35 into the axial hole 20d of the rod member 20 (as shown by the arrows in Fig. 5), guided from the axial hole 20d and into the airtight space 45 through the threaded holes 20e, and admitted from the airtight space 45 into the gas filling chamber 22 via the slots 26. The compressed gas can also be admitted into the gas filling chamber 22 by the elastic deformation of the first sealing member 23 in the absence of slots 26 underneath the first sealing member 23.

The rod member 20 is subsequently moved (together with the outer cylinder 32 and the blocking member 33) downward to its initial position in relation to the cylinder main body 21 by an air cylinder, hydraulic cylinder, or other drive means; the gas filling chamber 22 is rendered airtight; the compressed gas G in the gas filling chamber 22 is sealed; the outer cylinder 32 is subsequently slid downward in the manner shown in Fig. 4; the exterior of the top portion of the rod member 20 is exposed; the assembly is locked in place in this state such that the pin members 25 mate with the corresponding slots 26; and the gas spring 5 is then removed from the gas filling implement 30, completing the introduction of the compressed gas G.

The gas filling chamber 22 of the gas spring 5 can thus be filled with compressed gas G in a simple and reliable manner by the use of the gas filling implement 30, even when the gas spring 5 lacks the commonly mounted gas filling valve. In other words, using the gas spring 5 makes it possible to dispense with the gas filling valve and to symmetrically arrange a plurality of pin members 25, a plurality of slots 26, a plurality of threaded holes 20e, and the like about the axial center of the rod member 20.

Consequently, the entire gas spring 5 can be configured symmetrically about the axial center of the rod member 20, its center of gravity can be aligned with the axial center of the rod member 20, and the gas spring 5, which is mounted on a rotating main shaft 2, can be prevented from causing vibration, making it possible to securely prevent machining accuracy from decreasing when the main shaft 2 rotates at a high speed.

Another embodiment will now be described. The top, bottom, left, and right sides referred to in the description will correspond to the top, bottom, left, and right sides in Figs. 6-9.

The gas spring 5A of this embodiment comprises a rod member 60 with a cylindrical piston, a cylinder main body 61 fitted over the rod member 60, an annular gas filling chamber 62 filled with compressed gas G and disposed between the rod member 60 and the cylinder main body 61, a first sealing member 63 fitted over the rod member 60 above the gas filling chamber 62, a second sealing member 64 fitted into the cylinder main body 61 below the gas filling chamber 62, and a stopper member 65 internally fitted and threadably engaged with the cylinder main body 61 and slidably fitted over the rod member 60 on the opposite side from the gas filling chamber 62 in relation to the piston portion 60b of the rod member 60, as shown in Figs. 6 and 7.

The rod member 60 is configured such that an output portion 60a, a piston portion 60b, and a bottom cylinder 60c are integrally formed in a serial arrangement in the direction from the top end downward, and a drawbar 4 is slidably inserted into an axial hole 60d. An annular recess 60e is formed around the outside of the piston portion 60b at the bottom end thereof, and a first annular sealing member 63 is secured in the annular recess 60e.

The cylinder main body 61, whose vertical length is slightly less than that of the rod member 60, is configured as a monolithic structure composed of an upwardly disposed thin-walled cylinder 61a, whose length is about 2/3 of the total length, and a downwardly disposed thick-walled cylinder 61b whose length is about 1/3 of the total length. The thin-walled cylinder 61 a is slidably fitted over the piston portion 60b of the rod member 60, and a bottom cylinder 60c of the rod member 60 is slidably inserted into the rod insertion hole 61c (rod insertion hole 61c facing the second sealing member) inside the thick-walled cylinder 61b.

A threaded hole 61d (threaded hole 61d for the stopper member) is provided to the top-end portion of the thin-walled cylinder 61a, and the stopper member 65 is detachably screwed into the threaded hole 61d from the top. An annular recess 61e is formed around the inside of the thick-walled cylinder 61b at the top end thereof, and a second annular sealing member 64 is secured in the annular recess 61e. The cylinder main body 61 is detachably fastened by being fitted into a cylinder mounting hole 13 formed in the main shaft 4.

When the stopper member 65 is pressed against the piston portion 60b, the rod member 60 assumes an extended position in which the output portion 60a is extended all the way above the cylinder main body 61, and the drawbar 4 assumes a tool fastening position, as shown in Fig. 6. When the entire output portion 60a is retracted into the cylinder main body 61, the rod member 60 assumes a retracted position, and the drawbar 4 assumes an engagement release position, as shown in Fig. 7. The rod member 60 can move further down from the retracted position in Fig. 7, but the release mechanism 6 prevents any downward movement from the retracted position.

The movement of the rod member 60 in relation to the cylinder main body 61 is thus limited to the range between the extended position and the retracted position when the stopper member 65 is mounted. The space between the rod member 60 and the cylinder main body 61 at the top and bottom of the gas filling chamber 62 is sealed by the first and second sealing members 63 and 64, and the gas filling chamber 62 is kept in an airtight state when the rod member 60 moves up and down within this range. Consequently, the pressure of the compressed gas G in the gas filling chamber 62 acts on the piston portion 60b and creates a situation in which the rod member 60 is urged upward relative to the cylinder main body 61.

Following is a description of a method whereby the gas spring 5A is filled with compressed gas G. The gas filling implement 30A used during gas filling will first be described.

The gas filling implement 30A comprises a casing member 70 having an opening 70b in the top-end portion thereof and possessing a housing chamber 70a in which the gas spring 5A can be airtightly accommodated while the rod member 60 is moved vertically (axially) in relation to the cylinder main body 61; a blocking member 71 mounted by being fitted into the opening 70b in an airtight and slidable manner and designed to be able to come into contact with the rod member 60; a pull rod 72 inserted into the axial center of the gas spring 5A and designed such that the top end of the rod is immovably mounted on the blocking member 71, and the bottom-end portion of the rod is airtightly inserted into the casing member 70; a compressed gas filling conduit 73 formed in the casing member 70 and used to fill the housing chamber 70a with compressed gas G; and a check valve 74 incorporated into the compressed gas filling conduit 73 of the casing member 70, as shown in Figs. 8 and 9.

The casing member 70 comprises a sleeve 70c whose vertical length is significantly greater than that of the gas spring 5A, and a closing block 70d for airtightly closing the bottom end of the sleeve 70c through the agency of a sealing member 70e. The sleeve 70c and the closing block 70d are designed as components that can be disassembled. When these components are disassembled, the gas spring 5A is introduced without the stopper member 65 through the bottom of the sleeve 70c, the top-end portion of the cylinder main body 61 is brought into engagement with an upper ledge 70f somewhat above a middle portion on the internal periphery of the sleeve 70c, the closing block 70d is then mounted, and the gas spring 5A is immovably accommodated by the housing chamber 70a of the casing member 70.

The pull rod 72 is inserted into the axial hole 60d of the rod member 60 in an internally fitting fashion, and is thus passed through the entire gas spring 5A. The closing block 70d is provided with a vertically extended through hole 70g, and the bottom portion of the pull rod 72 in the gas spring 5A is inserted unimpeded into the through hole 70g. The space between the through hole 70g and the pull rod 72 forms part of the compressed gas filling conduit 73.

The blocking member 71 is mounted by being fitted into the opening 70b in an airtight and slidable manner through the agency of a sealing member 80 mounted by being fitted over the blocking member 71, and the bottom-end portion of the pull rod 72 is airtightly inserted into the casing member 70 through the agency of a sealing member 81 mounted by being fitted into a wall portion formed by the through hole 70g of the closing block 70d. The bottom end of the block 72 extends below the sealing member 81 when the blocking member 71 is fitted into the opening 70b and brought into contact with the rod member 60. The compressed gas filling conduit 73 and the housing chamber 70a of the casing member 70 are rendered airtight as a result.

When the gas filling chamber 62 of the gas spring 5A is to be filled with compressed gas G by employing the gas filling implement 30A, the stopper member 65 is first removed from the cylinder main body 61 of the gas spring 5A, and the gas spring 5A is placed into the gas filling implement 30A, as shown in Fig. 8. In this state, the compressed gas filling conduit 73 and the housing chamber 70a of the casing member 70 are rendered airtight in the above-described manner.

Not mounting the stopper member 65 removes the restrictions imposed on the rod member 60 (by the stopper member 65) in terms of the range within which the member can move in relation to the cylinder main body 61, and introducing compressed gas G in this state via the check valve 74 causes the rod member 60 to move together with the blocking member 71 and the pull rod 72 axially upward in relation to the cylinder main body 61.

At this time, the pressure of the compressed gas G introduced into the compressed gas filling conduit 73 via the check valve 74 acts on the bottom end face of the rod member 60, the rod member 60 is pushed upward, and the gas filling chamber 62 is then filled with compressed gas G via the rod insertion hole 61c and the compressed gas filling conduit 73 of the gas filling implement 30A while the rod member 60 is moved clear of the rod insertion hole 61c, as shown by the arrows in Fig. 9.

In this case, the rod member 60 is forcefully pushed upward because the compressed gas G acts on the piston portion 60b in a state in which the gas filling chamber 62 contains only a small amount of compressed gas G, and the rod member 60 is restricted in its upward movement by the pull rod 72 and the blocking member 71 before the first sealing member 63 reaches the threaded hole 61d of the cylinder main body 61. The rod member 60 is thus caused to move axially upward in relation to the cylinder main body 61 as long as the first sealing member 63 has not yet reached the threaded hole 61d, and the gas filling chamber 62 can be filled with compressed gas G via the rod insertion hole 61c. The first sealing member 63 is thereby prevented from being damaged as a result of contact with the threaded hole 61d.

The rod member 60 is subsequently moved (together with the pull rod 72 and the blocking member 71) downward to its initial position in relation to the cylinder main body 61 by the downward pulling of the pull rod 72; the gas filling chamber 62 is rendered airtight; the compressed gas G in the gas filling chamber 62 is sealed; the stopper member 65 is subsequently mounted; and the gas spring 5A is then removed from the gas filling implement 30A, completing the introduction of the compressed gas G.

The gas filling chamber 62 of the gas spring 5A can thus be filled with compressed gas G in a simple and reliable manner by the use of the gas filling implement 30A, even when the gas spring 5A lacks the commonly mounted gas filling valve. The same actions and effects as those achieved by the above-described main embodiment can therefore be obtained.

Modifications of these embodiments will now be described.
1) The above-described main embodiment can also be implemented using a control mechanism whereby the pressure of compressed gas G is exerted when the gas spring 5 is placed in the gas filling implement 30, and the gas filling chamber 22 is filled with the compressed gas G such that the blocking member 33 or the outer cylinder 32 is restricted together with the rod member 20 in its ability to move above the position occupied during gas introduction. The control mechanism can be constructed by providing special linkage among the inner cylinder 31, outer cylinder 32, blocking member 33, and axial hole blocking member 34 of the gas filling implement 30.
2) The above-described main embodiment can also be implemented by fashioning three or more pin members 25 and providing the cylinder main body 21 with three or more slots 26 and threaded holes 20e in association with these pin members. The pin members 25, slots 26, and threaded holes 20e are disposed symmetrically about the axial center of the rod member 20.
3) The other embodiment may also be configured such that the filling of the gas filling chamber 62 with the compressed gas G via the rod insertion hole 61c is supplemented by an arrangement in which the compressed gas G introduced to the housing chamber 70a above the cylinder main body 61 is subsequently admitted by the gas filling chamber 62 through the gap between the cylinder main body 61 and the rod member 60, with or without the elastic deformation of the first sealing member 63. In this case, the gas can be introduced unimpeded when the first sealing member 63 reaches the threaded hole 61d.

The main embodiment and the other embodiment can be modified in a variety of ways as long as the essence of the present invention is not compromised, and the present invention can be adapted not only to devices for fastening tools to main shafts, but also to various other mechanisms and devices required to perform drive functions.

## Claims

1. A gas spring, comprising a rod member with a cylindrical piston, a cylinder main body fitted over the rod member, and an annular gas filling chamber filled with compressed gas and disposed between the rod member and the cylinder main body, wherein said gas spring is **characterized by** further comprising:
a first sealing member fitted over the piston portion of the rod member at one end of the gas filling chamber, and a second sealing member fitted into the cylinder main body at the other end of the gas filling chamber;
a plurality of pin members disposed in an axially symmetrical fashion about the rod member; and
a plurality of slots provided to the cylinder main body to allow individual mating with the plurality of pin members and to restrict the range of movement of the rod member in relation to the cylinder main body, such that the cylinder main body is moved axially in relation to the rod member while the second sealing member is prevented from separating from the rod member in a state in which the pin members are not yet mounted; the gas filling chamber is filled with compressed gas through the slots; the cylinder main body is then moved back; and the pin members are locked in place.

2. A gas spring, comprising a rod member with a cylindrical piston, a cylinder main body fitted over the rod member, and an annular gas filling chamber filled with compressed gas and disposed between the rod member and the cylinder main body, wherein said gas spring is **characterized by** further comprising:
a first sealing member fitted over the rod member at one end of the gas filling chamber, and a second sealing member fitted into the cylinder main body at the other end of the gas filling chamber; and
a stopper member internally fitted and threadably engaged with the cylinder main body and slidably fitted over the rod member on the opposite side from the gas filling chamber in relation to the piston portion of the rod member; and by being configured such that the rod member is moved axially in relation to the cylinder main body while the first sealing member is prevented from reaching the threaded hole for the stopper member of the cylinder main body in a state in which the stopper member is not yet mounted, the gas filling chamber is filled with compressed gas through a rod insertion hole facing the second sealing member, the rod member is then moved back, and the stopper member is mounted.

3. A gas filling method for introducing compressed gas into a gas spring comprising a rod member with a cylindrical piston, a cylinder main body fitted over the rod member, an annular gas filling chamber filled with compressed gas and disposed between the rod member and the cylinder main body, a first sealing member fitted over the piston portion of the rod member at one end of the gas filling chamber, a second sealing member fitted into the cylinder main body at the other end of the gas filling chamber, a plurality of pin members disposed in an axially symmetrical fashion about the rod member, and a plurality of slots provided to the cylinder main body to allow individual mating with the plurality of pin members and to restrict the range of movement of the rod member in relation to the cylinder main body, wherein said gas filling method is **characterized in that** the gas spring is placed in a special gas filling implement in a state in which the pin members are not yet mounted; the cylinder main body is moved axially in relation to the rod member while the second sealing member is prevented from separating from the rod member; the gas filling chamber is filled with compressed gas through the gas filling implement and the slots; the cylinder main body is then moved back; and the pin members are locked in place.

4. A gas filling method for a gas spring as defined in Claim 3, **characterized in that** the special implement comprises an inner cylinder airtightly fittable over the slot-free portion of the cylinder main body, an outer cylinder configured to extend all the way to one end the inner cylinder and to slidably fit over the inner cylinder in an airtight fashion, a blocking member configured to block one end of the rod member and to airtightly fit into the end portion of the outer cylinder, an axial hole blocking member airtightly inserted into the axial hole of the rod member on the opposite side from the blocking member, and a compressed gas filling conduit formed in the axial hole blocking member.

5. A gas filling method for introducing compressed gas into a gas spring comprising a rod member with a cylindrical piston, a cylinder main body fitted over the rod member, an annular gas filling chamber filled with compressed gas and disposed between the rod member and the cylinder main body, a first sealing member fitted over the rod member at one end of the gas filling chamber, a second sealing member fitted into the cylinder main body at the other end of the gas filling chamber, and a stopper member internally fitted and threadably engaged with the cylinder main body and slidably fitted over the rod member on the opposite side from the gas filling chamber in relation to the piston portion of the rod member, wherein said gas filling method for a gas spring is **characterized in that** the gas spring is placed in a special gas filling implement in a state in which the stopper member is not yet mounted; the rod member is moved axially in relation to the cylinder main body while the first sealing member is prevented from reaching the threaded hole for the stopper member of the cylinder main body; the gas filling chamber is filled with compressed gas through the gas filling implement and a rod insertion hole facing the second sealing member; the rod member is then moved back; and the stopper member is mounted.

6. A gas filling method for a gas spring as defined in Claim 5, **characterized in that** the special gas filling implement comprises a casing member having an opening on one end of the stopper member side and possessing a housing chamber in which the gas spring can be airtightly accommodated while the rod member is moved axially in relation to the cylinder main body; a blocking member mounted by being fitted into the opening in an airtight and slidable manner and designed to be able to come into contact with the rod member; a pull rod inserted into the axial center of the gas spring and designed such that one end thereof is immovably mounted on the blocking member, and the other end thereof is airtightly inserted into the casing member; and a gas filling conduit formed in the casing member and used to fill the housing chamber with compressed gas.
